# EUROPÄISCHE PATENTSCHRIFT

(11) **EP 2 577 778 B1**
(45) Veröffentlichungstag und Bekanntmachung des Hinweises auf die Patenterteilung: **18.03.2015**
(21) Anmeldenummer: 11722766.0
(22) Anmeldetag: 19.05.2011
(51) Int. Cl.: H01M 4/20, H01M 4/22, H01M 4/62, H01M 10/06

(54) **ADDITIV ZUR HERSTELLUNG VON POSITIVEN AKTIVEN MASSEN FÜR BLEIAKKUMULATOREN**
ADDITIVE FOR PRODUCING POSITIVE ACTIVE COMPOSITIONS FOR LEAD ACCUMULATORS
ADDITIF POUR LA FABRICATION DE MASSES POSITIVES ACTIVES POUR DES ACCUMULATEURS AU PLOMB

(30) Priorität: 22.05.2010 DE 102010021268
(43) Veröffentlichungstag der Anmeldung: 10.04.2013
(73) Patentinhaber: Penox GmbH, 51063 Köln (DE)
(72) Erfinder: KLEIN, Ian, 38667 Bad Harzburg (DE)
(74) Vertreter: Hagemann, Heinrich
(86) Internationale Anmeldenummer: PCT/EP2011/058183
(87) Internationale Veröffentlichungsnummer: WO 2011/147740

(56) Entgegenhaltungen:
- DE-A1- 10 360 027
- US-A1- 2006 093 912

## Beschreibung

Die Erfindung betrifft in Additiv zur Herstellung von positiven aktiven Massen für Bleiakkumulatoren auf der Basis feinteiligen 4-basischen Bleisulfats einer mittleren Teilchengröße von weniger als 3 µm, sowie feinteiliger Kieselsäure sowie ein Verfahren zur Herstellung dieses Additivs.

Nach dem Stand der Technik werden die positiven Platten bei der Herstellung von Blelakkumulatoren nach der Pastierung der Gitter mit der positiven aktiven Masse in sogenannten Reifungs- und Trocknungskammern in Chargen oder kontinuierlich gereift und getrocknet. Aus den Hauptinhaltsstoffen in Form von Bleioxid, Wasser sowie Bleisulfat werden durch die Reifung 3-basische (3PbOPbSO₄) und/oder 4-basische (4PbOPbSO₄) Bleisulfate gebildet. Die Platten werden überwiegend in Stapeln auf Paletten ohne Auflockerung gelegt. Seltener werden sie auf Paletten ohne Auflockerung gestellt oder im speziellen Fall von Doppelgittern mit außenliegenden Fahnen locker in Gestelle gehängt.

Für die Reifung zu 3-basischem Bleisulfat mit Kristallgrößen < 10µm ist es gängige Praxis, die Platten bei etwa 55°C über einen Zeitraum von 12 bis 24 Stunden zu reifen und anschließend zu trocknen. Je nach dem verwendeten Oxid sowie der gewünschten Restfeuchte dauert die Trocknung bis zu einigen Tagen.

Abhängig von den chemischen und physikalischen Bedingungen findet im Temperaturbereich von 60 bis 70°C ein Phasenübergang von der Bildung von 3-basischen zur Bildung von 4-basischem Bleisulfat statt. Für die Reifung zu 4-basischem Bleisulfat werden die Platten nach gängiger Praxis einige Stunden im Wasserdampf bei einer Temperatur von üblicherweise > 80°C gereift und anschließend, wie bei 3-basisch gereiften Platten, getrocknet. Ein wesentlicher Nachteil bei einer derartigen Reifung unter Wasserdampf ist die Entstehung von grobkristallinen 4-basischen Bleisulfatkristallen, wobei Kristallgrößen > 50 µm auftreten können.

Die gereifte aktive Masse der positiven Platten wird während der nachfolgenden Formation elektrochemisch zu Bleidioxid umgewandelt. Die Umwandlung der basischen Bleisulfate gestaltet sich mit zunehmender Kristallgröße aufwendiger und langwieriger. Die benötigte elektrische Energiemenge zur Umwandlung einer grobkristallinen Struktur ist um mehr als 25% höher als diejenige einer kleinkristallinen Struktur. Hier soll unter "kleinkristalliner Struktur" ein Material verstanden werden, bei dem die Kristallgröße < 10 µm ist. Bei einer großkristallinen Struktur liegen Kristalle > 30 µm vor. Zur vollständigen Formierung sind darüber hinaus Standzeiten einzulegen. Durch die Einbringung der höheren Energiemenge und die Notwendigkeit von einzulegenden Standzeiten nimmt die Formation von grobkristallinem 4-basischen Bleisulfat in der Regel eine wesentlich längere Zeit in Anspruch.

Die Reifung zu 4-basischen Bleisulfaten ist vorteilhaft bei Bleiakkumulatoren mit antimonfreien Legierungen für die positiven Gitter. Bleiakkumulatoren mit antimonfreien Legierungen für die positiven Gitter und 4-basisch gereiften, positiven aktiven Massen weisen eine stabile Kapazität bei zyklischer Belastung auf und haben eine deutlich verlängerte Lebensdauer. Bleiakkumulatoren mit antimonhaltigen Legierungen der positiven Gitter werden zunehmend durch antimonfreie Gitter ersetzt, da diese Bleiakkumulatoren darüber hinaus eine längere Lagerfähigkeit sowie einen sichtlich geringeren Wasserverbrauch aufweisen.

Aus diesem Grund besteht ein großes Interesse an Verfahren sowie Möglichkeiten, positive Platten zu kleinkristallinem 4-basischen Bleisulfat zu reifen. Nach dem Stand der Technik sind hierzu zwei Verfahren herauszustellen:

Nach einer üblichen Fertigungspraxis werden die Platten zunächst 3-basisch gereift und vorteilhafterweise unter 0,5 Gew.-% Restfeuchte getrocknet. Anschließend erfolgt eine mehrstündige Wasserdampfbehandlung bei Temperaturen von üblicherweise > 80°C. Während dieser Phase wird das 3-basiche Bleisulfat in 4-basisches Bleisulfat umgewandelt. Die Kristallgröße bleibt hierbei nahezu unverändert, sofern die Feuchte während der Wasserdampfbehandlung der Platten etwa 2 Gew.-% nicht überschreitet. Bei zu feuchten Platten tritt ein Wachstum zu grobkristallinem 4-basischen Bleisulfat auf. Bei einem ordnungsgemäß ausgeführten Verfahren liegen nach einer anschließenden erneuten Trocknung Platten mit kleinkristallinem 4-basischen Bleisulfat vor. Ein großer Nachteil dieses Verfahrens besteht in der langen Prozesszeit. Darüber hinaus ist die Paste-Gitter-Anbindung schlechter als bei den im Wasserdampf unmittelbar zu grobkristallinem 4-basischen Bleisulfat gereiften positiven Platten. Die Größe der Kristalle des 4-basischen Bleisulfats kann nicht gesteuert werden und liegt bei Kristallgrößen < 3 µm. Dies kann bei zyklischer Tiefentladung von nassen Bleiakkumulatoren zu einer irreparablen Schädigung der positiven Elektroden und somit zur Verkürzung der Gebrauchsdauer der Bleiakkumulatoren führen.

In einem zweiten bekannten Verfahren wird der aktiven positiven Masse während des Herstellungsprozesses zuvor kleingemahlenes 4-basisches Bleisulfat zugegeben. Die Reifung erfolgt in der gleichen Weise wie bei der angesprochenen Reifung zu grobkristallinem 4-basischen Bleisulfat unter Wasserdampf und vorzugsweise bei Temperaturen oberhalb 80°C. Die zugegebenen kleingemahlenen 4-basischen Bleisulfatkristalle von < 1 µm Durchmesser wirken als Keimbildner und erlauben vereinzelten Platten ein gezieltes Kristallwachstum zu einer kleinkristallinen 4-basischen Kristallstruktur. Dieses Verfahren wird vorzugsweise kontinuierlich durchgeführt.

Der Nachteil dieses Verfahrens Ist die Notwendigkeit, eine Auflockerung der Platten z.B. durch Hängen von Doppelplatten auf Abstand oder durch eine Klimamembran zwischen Einzelplatten. Es ist heutige gängige Praxis bei der Herstellung von Platten von Bleiakkumulatoren, diese nach der Pastierung ohne Abstandshalter in Stapeln abzustapeln und im Stapel zu reifen. Die Notwendigkeit einer Vereinzelung der Platten stellt somit einen erheblichen Mehraufwand dar. So können die heutigen Anlagen und Techniken für die Plattenherstellung nicht ohne neue Zusatzeinrichtungen bzw. erheblichen Änderungen genutzt werden. Die Auflockerung der Platten durch Zwischenräume oder Klimamembranen führt zu mehr Platzbedarf, wodurch das Fassungsvermögen an Platten bei bestehenden Reifungs- und Trocknungskammern erheblich reduziert wird.

Eine vorteilhafte Weiterbildung des obigen Standes der Technik ergibt sich aus der WO 2004/059772 A2. Diese betrifft ein Additiv zur Herstellung von positiven aktiven Massen für Blelakkumulatoren auf der Basis des 4-basischen Bleisulfats. Dieses Additiv enthält ein 4-basisches Bleisulfat einer mittleren Teilchengröße von weniger als etwa 3 µm sowie zur Verhinderung der Agglomeration der Teilchen des 4-basischen Bleisulfats feinteilige Kieselsäure. Die feinteilige Kieselsäure liegt hydrophob und/oder hydrophil vor und ist insbesondere pyrogen. Dieses bekannte Additiv zeigt umfängliche Vorteile, wie sie in der WO 2004/059772 A2 dargestellt werden. So wird bei der Anwendung dieses Additivs das gesamte Spektrum der derzeitigen Anlagentechnik und üblicher Prozessabläufe abgedeckt. Heutige Pastierlinien mit nachgeschalteten Stapelanlagen für alle gängigen Reifungs- und Trocknungskammern sind ohne Modifikation einsetzbar. Darüber hinaus kann mit diesem Additiv eine kontinuierliche Reifungs- und Trocknungstechnik in einem Gesamtzeitraum von etwa 3 bis 4 Stunden dargestellt werden. In allen angesprochenen Anwendungsfällen treten als Endprodukt kleinkristalline 4-basische Bleisulfate mit Kristallgrößen von weniger als 10 µm auf. Die hiermit erzeugten Platten sind ebenso leicht zu formieren, wie die aus 3-basischen Bleisulfaten gefertigten.

Als weiterer Stand der Technik ist der aus der US 2006/093912 A1 zu bezeichnen. Darin werden Additive für Bleipasten und für Polymere beschrieben. Bei dem jeweiligen Additiv handelt es sich um das Reaktionsprodukt von Schwefelsäure, Wasser und Bleioxid. Dieses Additiv kann in Vermischung mit Schwefelsäure, Wasser und Bleioxid herangezogen werden, um eine modifizierte Bleipaste herzustellen, die, wenn sie als Paste in Bleiplatten eingebracht wird, dazu führt, dass diese Platten verbesserte Leistungsfähigkeit aufweisen. So lässt sich hiermit die Aushärtungsseite des aktiven Pastenmaterials sowie die Menge, die zum Härten erforderlich ist, herabsetzen.

Die Erfindung hat sich die Aufgabe gestellt, die Vorteile, die mit der Lehre des Standes der Technik nach der WO 2004/059772 A2 verbunden sind, durch eine Weiterbildung beizubehalten, wobei es jedoch insbesondere angestrebt wird, die Bestandteile des Additivs in der Batteriepaste optimal zu verteilen. Des Weiteren ist es Ziel der Erfindung, eine kostengünstige Herstellung vorteilhafter 4-basisch gereifter, zyklenfester Batterien zu ermöglichen. Ferner soll es angestrebt werden, dass die gereiften Platten der Batterien eine bessere Aufladbarkeit ermöglichen. Dadurch werden geringere Ströme zur Formierung einer Batterie benötigt. Mit anderen Worten ist weniger Energie aufzuwenden, um die Batterie funktionsfähig zu machen. Darüber hinaus soll die Teilchengröße, insbesondere bei Industriebatterien, in wünschenswerter Weise steuerbar sein, so beispielsweise 4-basische Bleisulfate für die Batterien mit einer Kristallgröße von 15 bis 18 µm eingestellt werden können. Hiermit soll auch ein Problem des Standes der Technik gelöst werden, wonach mit dem bisherigen Additiv auf 1 Tonne Bleipaste 2 - 4 kg entfallen. Hierbei ist es beschwerlich, eine angemessene und wünschenswert gute Verteilung zu erzielen. Mit dem von der Erfindung angestrebten Additiv soll insbesondere eine optimierte Verteilung der anderen Bestandteile des Additivs in der Batteriepaste bewirkt werden.

Diese Aufgabe wird durch ein Additiv zur Herstellung von positiven aktiven Massen für Bleiakkumulatoren auf der Basis feinteiligen 4-basischen Bleisulfats einer mittleren Teilchengröße von weniger als 3 µm sowie feinteiliger Kieselsäure gelöst, das dadurch gekennzeichnet ist, dass das Additiv Bleimennige (2PbO.PbO₂) enthält, wobei die mittlere Teilchengröße der Bleimennige kleiner als 1,5 µm ist.

Eine optimale Lösung der gestellten Aufgabe wird dadurch erreicht, dass das Additiv etwa 20 bis 80 Gew.-%, insbesondere 40 bis 70 Gew.-% Bleimennige enthält. Besonders bevorzugt ist es, wenn das Additiv 45 bis 65 Gew.-% Bleimennige enthält, wobei der Bereich von 55 bis 65 Gew.-% besonders bevorzugt ist. Die mittlere Teilchengröße der Bleimennige hat ist kleiner als etwa 1,5 µm, wobei der Bereich von etwa 0,2 bis 1 µm besonders vorteilhaft ist. Besonders günstig ist es, wenn die mittlere Teilchengröße der Bielmennige zwischen etwa 0,4 und 0,6 µm liegt. Bei vorteilhaften Ausführungen der Erfindung ist eine Optimierung der spezifischen Oberfläche der Bleimennige nach BET anzustreben. Dies ist fachmännisch möglich.

Wenn Im Rahmen der Erfindung von "*Bleimennige*" gesprochen wird, dann ist dabei zu bedenken, dass die Bleimennige PbO₂ neben PbO enthält. Im Rahmen der Erfindung wird es bevorzugt, dass in der eingesetzten Bleimennige auf 1 Mol PbO₂ weniger als 2,2 Mol PbO entfallen. Ganz besonders ist es bevorzugt, wenn auf etwa 1 Mol PbO₂ weniger als 2,1, insbesondere etwa 2 Mol PbO entfalten. Es hat sich gezeigt, dass das Mischen von reinem PbO₂ mit reinem PbO zu Nachteilen führt. Freies PbO würde in unerwünschter Weise Bleihydroxide bilden. Das PbO ist in der Bleimennige chemisch eingebunden und führt nicht zu diesen Nachteilen. Zwar kann Handelsmennige etwa 80% Pb₃O₄ (2PbO+PbO₂) und daneben In einem gewissen Umfang freies PbO enthalten. Daher ist es angestrebt, eine im Handel erhältliche Bleimennige heranzuziehen, bei der das freie PbO vernachlässigbar ist, insbesondere möglichst weniger als 20 Gew.-%, insbesondere weniger als 15 Gew.-% PbO beträgt. Besonders vorteilhaft ist es, wenn möglichst < 10 % freies PbO vorliegt.

Zur Optimierung des erfindungsgemäßen Additivs ist es zweckmäßig, dass die Bleimennige eine spezifische Oberfläche nach BET von weniger als 1,5 m²/g, insbesondere von weniger als 1,3 m²/g aufweist, wobei es als bevorzugt gilt, wenn die entsprechenden BET-Werte zwischen 1,3 und 0,9, und insbesondere zwischen 1,3 und 0,5 m²/g liegen.

Nachfolgend sollen die weiteren Bestandteile des erfindungsgemäßen Additivs, insbesondere in ihren optimalen Ausgestaltungen, dargestellt werden:

Es hat sich bei dem Einsatz des erfindungsgemäßen Additivs gezeigt, dass dann besonders gute Effekte erzielbar sind, wenn die mittlere Teilchengröße des 4-basischen Bleisulfats insbesondere weniger als 1,5 µm beträgt. Der Rahmen von 0,2 bis 0,9 µm erweist sich als besonders vorteilhaft. Ein Unterschreiten des Wertes von 0,2 µm würde wirtschaftlich keinen Vorteil bringen. Mit zunehmender mittlerer Teilchengröße muss die Menge an Additiv erhöht werden, so dass auch hier aus wirtschaftlichen Gründen ein Überschreiten des oberen Wertes vermieden werden sollte.

Dabei hat sich gezeigt, dass die im Handel erhältlichen feinteiligen Kieselsäuren dann von besonderem Vorteil sind, wenn deren spezifische Oberfläche nach BET weniger als 300 m²/g, insbesondere weniger als 150 m²/g beträgt. Die im Handel erhältlichen feinteiligen Kieselsäuren werden üblicherweise durch die Angabe der spezifischen Oberfläche in der Typenbezeichnung klassifiziert. Vor allem kann eine Korrelation zwischen den Angaben zur spezifischen Oberfläche der feinteiligen Kieselsäure und den entsprechenden Teilchengrößen im alkalischen Bereich, der bei der Herstellung der aktiven Massen vorliegt, vorgenommen werden.

Eine zu feine Teilchengröße der Kieselsäure ist vorzugsweise zu vermeiden. Die mittlere Teilchengröße der eingesetzten feinteiligen Kieselsäuren liegt bei einer derartigen Betrachtungsweise zweckmäßigerweise in dem Bereich zwischen 10 und 120 nm, insbesondere zwischen 20 und 80 nm, wobei der Bereich von 40 bis 60 nm besonders vorteilhaft ist. Wird der Wert von 10 nm unterschritten, dann stellt sich nicht die gewünschte Wirkung im Hinblick auf die Vermeidung der Agglomeration der Teilchen des 4-basischen Bleisulfats ein. Der Wert von 120 nm könnte in Einzelfällen auch prinzipiell überschritten werden, wenngleich die wünsehenswerten Effekte in dem angesprochenen Rahmen von 40 bis 60 nm am besten in Erscheinung treten.

Wenn die Teilchen zu klein sind, dann führt dies dazu, dass während der Reifung eine breite Kornverteilung von 4-basischen Bleisulfatkristallen unterschiedlicher Kristallgröße auftritt. Bei Verwertung derartiger Kieselsäuren können 4-basische Bleisulfatkristalle einer Teilchengröße von größer als 10 µm nicht vermieden werden. Diese treten teils einzeln verteilt, teils In Nestern auf und können Kristallgrößen erreichen, wie sie üblicherweise bei zu grobkristallinen gereiften Platten zu finden sind. In dem angesprochene Rahmen der Teilchengröße von insbesondere 20 bis 80 nm und ganz besonders von 40 bis 60 nm wird die Agglomeration der feingemahlenen 4-basischen Impfkristalle verhindert. Darüber hinaus wird es gewährleistet, dass sehr homogene feinkristalline 4-basische Bleisulfatkristallstrukturen bei der Reifung entstehen. Die Endgröße der 4-basischen Bleisulfatkristalle wird durch die Menge an zugegebenem Mikrosulfat gesteuert. Aus wirtschaftlichen Gründen hat es sich für Bleiakkumulatoren mit freier Schwefelsäure als Elektrolyten als vorteilhaft erwiesen, die Menge derartig festzulegen, dass eine kleinkristalline 4-basische Kristallstruktur mit Kristallgrößen in einer Bandbreite von 5 bis 10 µm erzielt wird. Für eine derartige Verteilung ist eine einfache Formation möglich. Bei verschlossenen Bleiakkumulatoren mit festgelegtem Elektrolyten in Gelen oder mikroporösem Glasvlies kann eine Verschiebung zu kleineren Kristallgrößen unter Erhöhung der Menge an Mikrosulfat vorteilhaft sein. Als Richtwerte können bei Zugabe von 0,5 bis 3,0 Gew.-% der erfindungsgemäßen Aufschlämmung die Kristallgrößen des 4-baslschen Bleisulfates nach der Reifung der aktiven Masse im Bereich von etwa 2 bis 10 µm gesteuert werden. Aus wirtschaftlichen Gründen wird vorgeschlagen die Menge an Aufschlämmung so festzulegen, dass für (a) sogenannte nasse Bleiakkumulatoren Kristaligrößen von 5 bis 10 µm durch Zugabe von 0,5 bis 2% Aufschlämmung und für (b) verschlossene Batterien von 2 bis 5 µm durch Zugabe von 2 bis 3 Gew. -% erhalten werden. Demzufolge wird der wünschenswerte Effekt durch die Menge an zugegebenem Mikrosulfat und nicht durch Prozessparameter gemäß üblichem Vorgehen gesteuert (Temperatur, Feuchte und Zeit).

Im Rahmen der Erfindung unterliegt der Fachmann bezüglich der Auswahl der feinteiligen Kieselsäure keiner wesentlichen Einschränkung. Vorzugsweise werden jedoch pyrogene Kieselsäuren eingesetzt, und zwar "hydrophobe" und / oder "hydrophile" Qualitäten.

Bezüglich des Mengenverhältnisses von 4-basischem Bleisulfat und feinteiliger Kieselsäure in dem erfindungsgemäßen Additiv gibt es keine kritische Begrenzung. Selbstverständlich muss der Anteil an feinteiliger Kieselsäure so hoch gewählt werden, dass der wünschenswerte Effekt der Verhinderung der Agglomeration der Teilchen des 4-basischen Bleisulfats Im angestrebten Umfange stattfindet. Zweckmäßigerweise wird die Zusammensetzung des erfindungsgemäßen Additivs so eingestellt, dass, bezogen auf das Gesamtgewicht aus 4-basischem Bleisulfat und feinteiliger Kieselsäure, 0,01 bis 10 Gew.-%, Insbesondere 0,02 bis 5 Gew.-% feinteilige Kieselsäure vorliegen. Ganz besonders wird der Bereich von 0,05 bis 0,5 Gew.-% gewählt. Unter dem Wert von 0,01 Gew.-% feinteiliger Kieselsäure wird nicht mehr hinlänglich die Agglomeration verhindert. Bei einem Wert von mehr als 10 Gew.-% findet keine wesentliche Steigerung dieses gewünschten Effektes mehr statt.

Die quantifizierende Relation zwischen dem feinteiligen 4-basischen Bleisulfat sowie der gleichfalls in das erfindungsgemäße Additiv einbezogenen Bleimennige ist nicht kritisch. Je nach Anwendungsfall lässt sich diese Relation fachmännisch optimieren. Man könnte es als vorteilhaft angeben, wenn auf 1 Gew.-Teil feinteiligen 4-basischen Bleisulfat 1,0 bis 2,0 Gew.-Teile Bleimennige, insbesondere 1,4 bis 1,6 Gew.-Teile Bleimennige entfallen. Auf jeden Fall wird In zweckmäßiger Weise der Anteil an 4-basischem Bleisulfat gegenüber dem Stand der Technik, wie vorstehend geschildert, nur so weit reduziert bzw. durch die Bleimennige (kostengünstig) ersetzt, dass noch die wünschenswerte Effekte eintreten bzw. die der Erfindung zugrundeliegende Aufgabe in dem angestrebten Umfang gelöst wird.

Das erfindungsgemäße Additiv liegt vorzugsweise in Form einer wässrigen Aufschlämmung vor und wird insbesondere nach dem später noch beschriebenen erfindungsgemäßen Verfahren erhalten. Diese wässrige Aufschlämmung wird bei noch später angesprochenen Verwendungsmöglichkeiten bevorzugt. Gleichwohl ist es möglich, die erhaltenen wässrigen Aufschlämmungen zu einem Pulver zu trocknen, wobei dieses vorzugsweise durch Sprühtrocknen der wässrigen Aufschlämmung erhalten wird. Es hat sich als vorteilhaft erwiesen, dass die angesprochene wässrige Aufschlämmung, die ohne Trocknen der angestrebten Verwendung zugeführt wird, einen Feststoffgehalt von 10 bis 70 Gew.-%, insbesondere von 20 bis 50 Gew.-%, aufweist. Wird der Höchstwert von 70 Gew.-% überschritten, dann Ist die gleichmäßige Einarbeitung In die positive aktive Masse erschwert oder ausgeschlossen. Die Gleichmäßigkeit bzw. Homogenität der fertigen positiven aktiven Masse ist erforderlich, um durch die Reifung eine homogene Korngrößenverteilung mit enger Bandbreite zu erzielen. Theoretisch ist die untere Begrenzung des Feststoffgehaltes der erfindungsgemäßen wässrigen Aufschlämmung nur durch Pastenrezeptur bezüglich des Wassergehaltes limitiert.

Gegenstand der Erfindung ist des Weiteren ein Verfahren zur Herstellung des erfindungsgemäßen Additivs, wie es vorstehend dargestellt wird und in den Ansprüchen 1 bis 13 beansprucht wird. Dieses Verfahren ist dadurch gekennzeichnet, dass 4-basisches Bleisulfat und Bleimennige im wässrigen Medium, insbesondere in demineralisiertem Wasser, nassvermahlen werden, wobei das Vermahlen so lange fortgeführt wird, bis die mittlere Teilchengröße des 4-basischen Bleisulfats weniger als etwa 3 µm beträgt und wobei dem zu vermahlenden oder vermahlten Material feinteilige Kieselsäure, insbesondere in hydrophiler und/oder hydrophober Form, zugegeben wird.

Dabei erfolgt das im Rahmen der Erfindung durchgeführte Nassvermahlen vorzugsweise In Rührwerkskugelmühlen, insbesondere in geschlossenen Rührwerkskugelmühlen. Die geschlossenen Rührwerkskugelmühlen zeigen den Vorteil, dass die Mahlenergie optimiert eingebracht wird. Es hat sich beim Nassvermahlen gezeigt, dass die Mahlköper zweckmäßigerweise in Form von Zirkonoxidkugeln vorliegen. Diese haben vorzugsweise einen Durchmesser von 0,2 bis 0,6 mm, insbesondere 0,3 bis 0,5 mm. Ganz besonders bevorzugt ist ein Durchmesser 0,4 mm. Um die mit der Erfindung angestrebten Erfolge optimal zu erzielen, erfolgt das Nassvermahlen vorzugsweise bei einer Temperatur von weniger als 70°C, insbesondere von weniger als 60°C. Der Bereich von 40 bis 50°C führt zu besonders guten technischen Ergebnissen.

Die Erfindung verkörpert sich demzufolge insbesondere in einer Aufschlämmung, die das erfindungsgemäße Additiv enthält. Wie nachfolgend gezeigt, kann diese Aufschlämmung in ein trockenes erfindungsgemäßes Additiv überführt werden. In der Regel wird die erfindungsgemäße Aufschlämmung jedoch als solche unmittelbar ihrem relevanten Anwendungszweck zugeführt, so insbesondere im Rahmen der Verwendung des Additivs nach mindestens einem der Ansprüche 1 bis 14 zur Herstellung von positiven aktiven Pasten für Bleiakkumulatoren, insbesondere für Bleiakkumulatoren mit hoher Tiefentladefestigkeit. Hierauf wird nachfolgend noch näher eingegangen. Die Menge des In der wässrigen Aufschlämmung erhaltenen erfindungsgemäßen Additivs unterliegt keinen kritischen Einschränkungen. Es Ist bevorzugt, wenn es in der wässrigen Aufschlämmung in einer Menge von 30 bis 65 Gew.-%, insbesondere 50 bis 60 Gew.-% vorliegt. Als besonders bevorzugter Bereich kann eine Menge von 53 bis 57 Gew.-% angegeben werden. Besonders günstige Ergebnisse werden erzielt, wenn der gewichtsprozentuale Anteil des Additivs in der wässrigen Aufschlämmung bei 55 Gew.-% liegt.

Es besteht die Möglichkeit und ist in Einzelfällen zweckmäßig, das in Form einer wässrigen Aufschlämmung im Rahmen des Nassvermahlens erhaltene Mahlerzeugnis durch Trocknen, insbesondere durch Sprühtrocknen, in ein Pulver zu überführen.

Nachfolgend sollen das erfindungsgemäße Verfahren sowie die vorteilhaften Verwendungen des erfindungsgemäßen Additivs noch näher erläutert werden, auch im Hinblick auf erzielbare Vorteile:

Erfindungsgemäß wird durch Vermahlung von 4-basischem Bleisulfat in wässrigem Medium unter Zugabe spezieller feinteiliger Kieselsäure und Bleimennige eine Aufschlämmung, die im Folgenden "Mikrosulfat" genannt werden soll, erzeugt. Ein handelsübliches 4-basisches Bleisulfat oder ein aus 4-basisch gereiften Platten gewonnenes 4-baslsches Bleisulfat wird als Ausgangssubstanz in einem Nassmahlverfahren, z.B. mit Rührwerkskugelmühlen, insbesondere in der geschlossener Form, vorzugsweise auf eine mittlere Kristallgröße von weniger als 1 µm, vermahlen. Wesentlicher Punkt Ist hierbei, dass die bezüglich der "Kieselsäure" und der "Bleimennige" angesprochenen zusätzlichen Parameter eingehalten werden. So muss insbesondere die Kieselsäure feinteilig sein, was nicht gleichermaßen für die Bleimennige gilt. Während es bevorzugt ist, dass die feinteilige Kieselsäure eine mittlere Teilchengröße von 10 bis 120 nm aufweist, gilt für die Bleimennige, dass deren mittlere Teilchengröße kleiner als 1,5 µm ist und insbesondere zwischen 0,2 und 1 µm liegt.

Vorzugsweise hat die Kieselsäure hydrophoben Charakter. Bevorzugt wird hierbei die angesprochene pyrogene Kieselsäure. Die pyrogene Kieselsäure zeigt den besonderen Vorteil, dass sie eine wünschenswerte Reinheit aufweist, so dass keine Fremdstoffe den Betrieb des Bleiakkumulators stören. Es ist dabei vorteilhaft, die feinteilige Kieselsäure schon im Ansatz dem zu mahlenden 4-basischen Bleisulfat zuzugeben. Allerdings ist auch eine Nachdosierung in einer geeigneten Dosteranlage möglich. Dies führt zu zusätzlichem wirtschaftlichen Aufwand und einer Verlängerung der gesamten Prozesszeit.

Es ist technisch vorteilhaft, beim Nassmahlprozess erzeugte Aufschlämmungen als Zugabe zum Mischprozess der aktiven positiven Massen bei der Herstellung der Bleiakkumulatoren zu verwenden. So kann die Aufschlämmung leicht mittels einer einfachen Dosiereinrichtung dem Mischprozess zugegeben werden. Eine Trocknung und Erzeugung eines Pulvers aus der Aufschlämmung ist möglich und In speziellen Anwendungsfällen sinnvoll, insbesondere im Rahmen einer Sprühtrocknung. In Folge des zusätzlichen Aufwandes und der Beachtung der Vorschriften des Arbeitsschutzes ist im allgemeinen im Hinblick auf mögliche Staubbelastungen die Erzeugung eines Pulvers gegenüber dem Einsatz einer wässrigen Aufschlämmung nicht zu empfehlen.

Mit dem erfindungsgemäßen Gedanken, wie er vorstehend dargestellt wurde, ist auch in gutem Einklang die weitergehende erfindungsgemäße Lehre, wonach die feinteilige Kieselsäure, insbesondere in hydrophober und/oder hydrophiler Form, insbesondere in pyrogener Form in Verbindung mit feinteiligem 4-basischen Bleisulfat einer mittleren Teilchengröße von weniger als 3 µm und mit der Bleimennige, insbesondere einer Teilchengröße von 0,2 bis 1 µm, verwendet wird und diese drei Komponenten einer positiven aktiven Masse für Bleiakkumulatoren zugegeben werden. Dabei werden die drei Komponenten vorzugsweise nacheinander in die positive aktive Masse für Bleiakkumulatoren gegeben, wobei es besonders bevorzugt ist, zunächst das feinteilige 4-basische Bleisulfat und dann die feinteilige Kieselsäure sowie die Bleimennige der positiven Masse zuzugeben.

Nach Zugabe der erfindungsgemäß erhaltenen Aufschlämmung zu der positiven aktiven Masse während des Mischprozesses entsteht bei der anschließenden Reifung bei den nachfolgend genannten Ausführungsformen besonders kleinkristallines 4-basisches Bleisulfat. Hieraus resultiert der Vorteil, dass die bestehenden Anlagen ohne Änderungen bei Einsatz des erfindungsgemäßen Additivs mit Vorteil genutzt werden können. Dabei ist es bevorzugt, dass das oben beschriebene Additiv in der positiven aktiven Masse für die Reifung und Trocknung von vereinzelten und nicht vereinzelten Platten bei der Herstellung von Bleiakkumulatoren verwendet wird. Besonders vorteilhaft erfolgt die Reifung der Platten in Stapeln, liegend, stehend oder hängend, unter Dampfeinwirkung bei einer Temperatur von etwa mehr als 60°C, insbesondere bei einer Temperatur von 80 bis 95°C, innerhalb von 1 bis 2 Stunden. Gute Ergebnisse werden auch erzielt, wenn die Reifung der Platten in Stapeln, liegend, stehend oder hängend, in Chargenkammern oder unter Dampfeinwirkung bei Temperaturen unterhalb 70°C und innerhalb von 12 bis 24 Stunden durchgeführt wird.

Die Reifung der Platten kann auch in einem kontinuierlichen Reifungs- und Trocknungsprozess erfolgen. Besonders gute Ergebnisse werden dabei erzielt, wenn die Reifung der Platten in Stapeln, liegend, stehend oder hängend, in einem kontinuierlichen Reifungs- und Trocknungsprozess unter Dampfeinwirkung innerhalb etwa 1 Stunde bei 80 bis 95°C durchgeführt wird. Bei dem beschriebenen kontinuierlichen Reifungs- und Trocknungsprozess ist es besonders bevorzugt, dass die Reifung und Trocknung in einer mehrstufigen Trocknung bei ansteigenden Temperaturen erfolgt. Alls besonders vorteilhaft hat es sich dabei erwiesen, dass die Trocknung bei ansteigenden Temperaturen bei 50°C beginnt und ansteigend bis auf 90°C, während 1 bis 4 Stunden, insbesondere während 2 bis 3 Stunden, durchgeführt wird.

Die gute Verteilbarkeit der 4-basischen Impfkristalle in der positiven aktiven Masse durch die feinteilige Kieselsäure sowie die Bleimennige führt bei der Reifung zu einer 4-basischen Kristallstruktur, die durch eine besonders enge Bandbreite an Kristallgrößen gekennzeichnet ist und sehr homogen zusammengesetzt ist. Dies gilt für Platten im Stapel als auch für gelockerte Platten bei der Reifung. Durch die enge Bandbreite an 4-basischen Kristallgrößen wird eine höhere Oberfläche bei gleichem Porenvolumen erreicht, anders ausgedrückt, ein höheres Porenvolumen bei gleicher Oberfläche der 4-basischen Kristalle erzielt. Der Vorteil besteht in einer Vergrößerung der Aufnahmemenge an Schwefelsäure in den freien Poren der Platte. Hierdurch verbessern sich die elektrischen Leistungsdaten. Für den Anwender von Mikrosulfat ergibt sich als wirtschaftlicher Vorteil die Möglichkeit der Einsparung an aktiver positiver Masse bei gleichen Leistungsdaten der Bleiakkumulatoren.

Bei der Anwendung der erfindungsgemäßen Lehre wird das gesamte Spektrum heutiger Anlagentechnik und üblicher Prozessabläufe abgedeckt. Heutige Pastierlinien mit den nachgeschalteten Stapelanlagen sowie alle gängigen Reifungs- und Trocknungskammern sind ohne Modifikation einsetzbar. Darüber hinaus kann künftig eine kontinuierliche Reifungs- und Trocknungstechnik in einem Gesamtzeitraum von etwa 3 bis 4 Stunden dargestellt werden. In allen angesprochenen Anwendungsfällen treten als Endprodukt kleinkristalline 4-basische Bleisulfate mit Kristallgrößen von weniger als 20 µm auf. Die so erzeugten Platten sind ebenso leicht zu formieren, wie aus 3-basischen Bleisulfaten gefertigte.

Die Vorteile des erfindungsgemäßen Additivs bestehen insbesondere darin, dass die gereiften Bleiplatten eine bessere Aufladbarkeit ermöglichen. Dabei werden geringere Ströme zur Formierung einer Batterie benötigt. Mit anderen Worten ist weniger Energie aufzuwenden, um die Batterie funktionsfähig zu machen. Darüber hinaus lässt sich die Tellchengröße, Insbesondere bei Industriebatterien, optimal steuern. Erstrebenswert ist es in besonderen Fällen, In den Batterien 4-basisches Bleisulfat einer Teilchengröße von 15 bis 18 µm einzustellen, Eine derartige Steuerung lässt sich mit den erfindungsgemäßen Additiven besonders vorteilhaft bewirken. Das Problem liegt allgemein darin, dass mit den bisherigen Additiven auf 1 t Bleipaste 2 - 4 kg entfallen. Hierbei Ist es beschwerlich, eine angemessen gute Verteilung zu erzielen. Mit dem erfindungsgemäßen Additiv lässt sich eine höhere Menge von 10 kg/t Bleipaste einsetzen, wobei das Einbeziehen der Bleimennige überraschenderweise, wie bereits herausgestellt, eine optimierte Verteilung aller Bestandteile des Additivs, einschließlich der Bleimennige selbst, in der Batteriepaste bewirkt. Darüber hinaus hat der zusätzliche Einbezug von Bleimennige keinen wesentlichen Einfluss auf den Preis des Produktes. Bei vergleichbaren Effekten führt dies dazu, dass die Kosten um etwa ein Drittel gesenkt werden können.

Mit besonderem Vorteil lässt sich das erfindungsgemäße Additiv, wie vorstehend beschrieben, zur Herstellung von positiven aktiven Pasten für Bleiakkumulatoren, insbesondere für Bleiakkumulatoren mit hoher Tiefentladefestigkeit, heranziehen.

Die Erfindung soll nachfolgend anhand von Beispielen sowie Vergleichsbeispielen noch näher erläutert werden.

### Beispiele/Vergleichsbeispiele

Es wurden nach den folgenden Rezepturen der Tabelle I zwei wässrige Aufschlämmungen hergestellt. Dabei wurde im Einzelnen wie folgt vorgegangen: Bei der einen Mischung wurde das TBLS+ herangezogen, das der Definition nach Anspruch 1 der EP 1 576 679 B1 (entspricht WO 2004/059772 A2) folgt. Bei der anderen Rezeptur wurde der Anteil an TBLS+ in der Aufschlämmung reduziert und durch Bleimennige ersetzt.

Herstellung der erfindungsgemäßen Aufschlämmung:
40 Gew.-Teile 4-basisches Bleisulfat
60 Gew.-Teile Bleimennige (> 86 % Pb₃O₄)
0,3 Gew.-Teile Kieselsäure
95 Gew.-Teile Wasser (demineralisiert)

Die Einzelkomponenten werden in einem Rührbehälter dispergiert und im Kreislauf unter Verwendung einer geschlossenen Rührwerkskugelmühle und Zirkonoxid Mahlkörpern bis zum Erreichen der Endkorngröße von < 1 µm vermahlen. Demzufolge wurden die aus der nachfolgenden Tabelle 1 ersichtlichen Aufschlämmungen hergestellt.

**Tabelle 1**

| | Wasser | Feststoffe | TBLS+ -Gehalt |
|---|---|---|---|
| TBLS+ -Aufschlämmung (Vergleich) | 57,7% | 42,3% | 33,8% |
| TBLS+/Bleimennige-Aufschlämmung (Erfindung) | 45,5% | 54,5% | 18,8% |
| | | | 35,3% Bleimennige (> 30% PbO₂) |

Anmerkungen: TBLS+ bedeutet Mischung aus 4-basischem Bleisulfat sowie feinteiliger Kieselsäure (Mischungsverhältnis: 2000 : 1 bis 200 : 1) gemäß EP 1 576 679 B1. TBLS+ /Bleimennige bedeutet eine Mischung, zurückgehend auf die vorliegende Erfindung (Gewichtsverhältnis TBLS+: Bleimennige 1 : 1,5).

Es lässt sich aus den Angaben der Tabelle 1 errechnen, dass bei der erfindungsgemäßen Rezeptur der Anteil an TBLS+ von 33,8% auf 18,8% reduziert wurde bzw. eine Reduzierung an teuerem TBLS+ um 45% erreicht wird. Die beiden Aufschlämmungen (Vergleich bzw. Erfindung) wurden wie folgt in eine LKW-Batteriepaste überführt:

Die Zusammensetzung der jeweils erhaltenen Pasten ergibt sich aus der nachfolgenden Tabelle 2:

**Tabelle 2**

| | TBLS+ (kg) (Vergleich) | TBLS+ /Bleimennige (kg) (Erfindung) |
|---|---|---|
| Batterieoxid (gemahlen) | 878 | 903 |
| Wasser | 108 | 108 |
| Fasern | 0,675 | 0,675 |
| Additive | 8 | 12 |
| H₂SO₄ (D 1,4 g/ml) | 93,9 | 93,8 |

Die in Tabelle 2 dargestellten Rezepturen (Vergleich / Erfindung) wurden wie folgt zu LKW-Batteriepasten verarbeitet:

Zur Herstellung der LKW-Batteriepasten wurde die entsprechende Menge Bleioxid (Mühlenoxid) im Mischer vorgelegt und der Mischer gestartet. Nachdem die Polyacrylfasern (Faserlänge 3 - 7 mm) manuell zudosiert wurden, wird das Bleioxid/Faser Gemisch mit Wasser angepastet. Nach vollständiger Wasserzugabe erfolgt für weitere 3 Minuten ein Homogenisieren der Paste. Dann wird das Mischwerkzeug gestoppt und das TBLS+ bzw. die TBLS+/Bleimennige Mischung zur Paste hinzugegeben. Nach weiteren 2 Minuten Mischdauer wird in einem Zeitraum von 13 Minuten die Schwefelsäure (50 %ig, Dichte 1,4 g/ml) zu der Bleioxidpaste hinzu dosiert. Dabei stellen sich Pastentemperaturen von 63 °C ein. Der Mischer wird für weitere 20 Minuten betrieben, bis die Pastentemperatur bei 45 °C liegt und zur Pastierung der Bleigitter geeignet Ist.

Schließlich wurden die beiden Batteriepasten in üblicher Weise auf Bleigitter gestrichen und einer Reifung unterzogen. Dabei wurde wie folgt vorgegangen:

Die pastierten Gitter werden in einem Vortrockner an der Oberfläche getrocknet, auf Paletten in vertikaler Anordnung (hängend) gelagert und diese Paletten in eine Reifekammer gestellt. Die Reifung erfolgte gemäß folgendem Reifeprogramm (Kammerparameter):

| | |
|---|---|
| 1. Stufe: | 80 °C, 100 % relative Feuchte, 4 Std. |
| 2. Stufe: | 55 °C, 70 - 80 % relative Feuchte, 14 Std. |
| 3. Stufe: | 55 - 85 °C, 0 % relative Feuchte, 10 Std. |

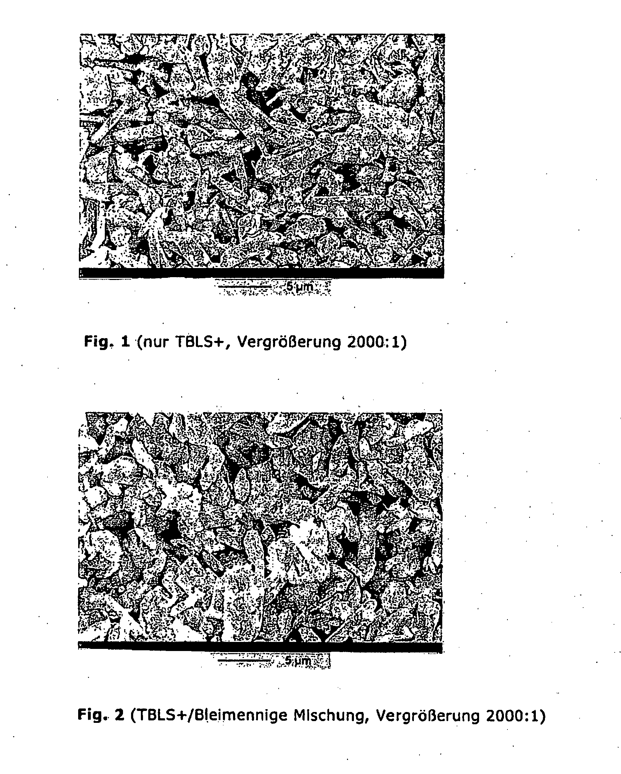

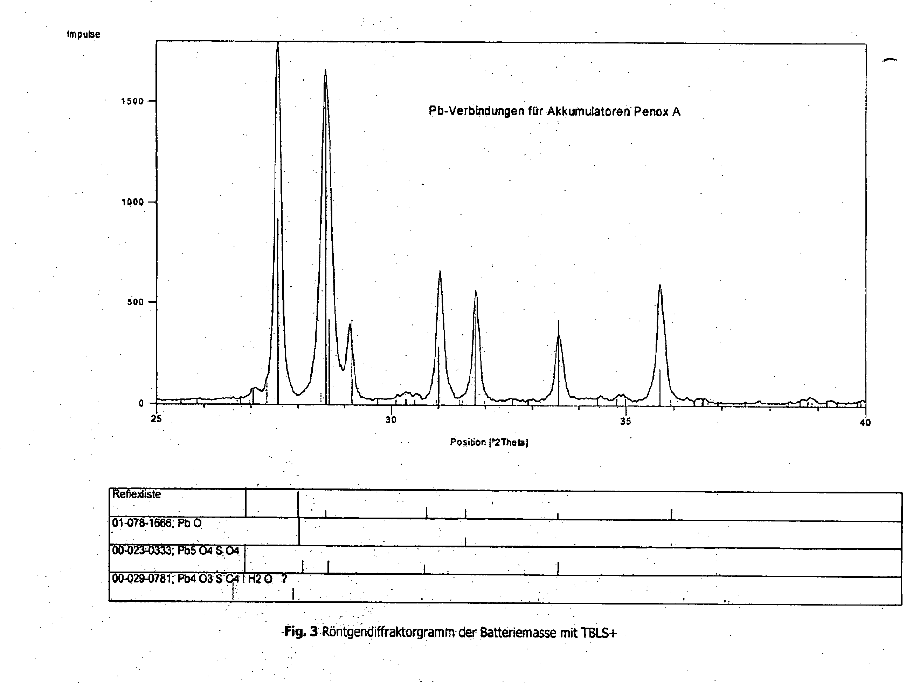

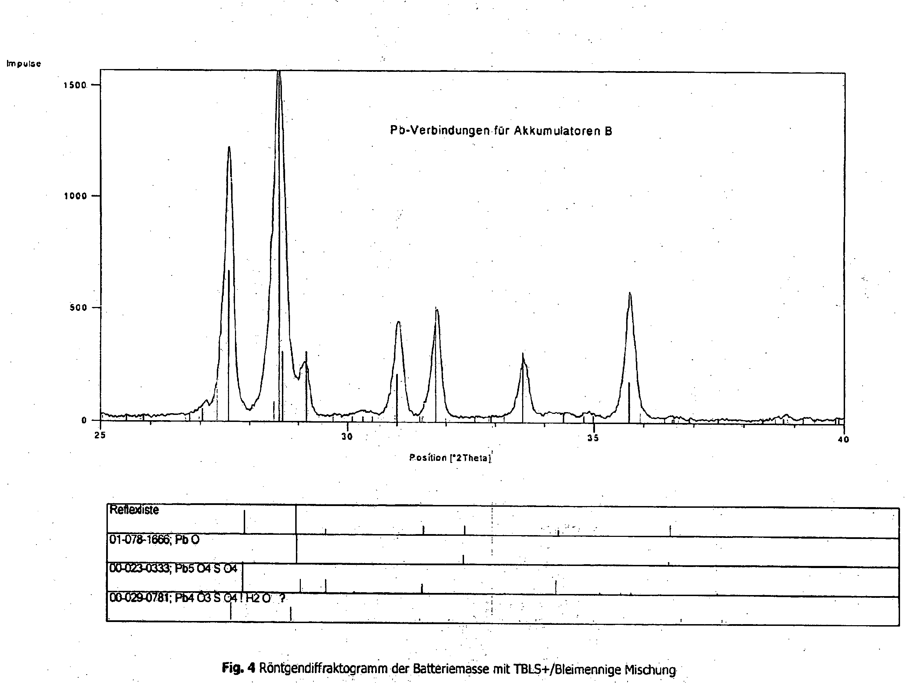

Von den beiden gereiften Batteriepasten wurde jeweils eine elektronenmikroskopische Aufnahme gemacht. Die Aufnahme der gereiften Batteriepaste, die allein auf TBLS+ zurückgeht, ist in Fig. 1 dargestellt, während die Fig. 2 eine Aufnahme der gereiften Batteriepaste zeigt, die der Erfindung zuzuordnen ist. Es sind keine relevanten Unterschiede festzustellen. Gleiches gilt für die Aufnahme mit einem Röntgendiffraktometer. Hierzu sei auf die folgenden Fig. 3 (TBLS+ / gereifte Batteriepaste) (Vergleich / Penox A) und auf die Fig. 4 (TBLS+ /Bleimennige / gereifte Batteriepaste) (Erfindung / Penox B) verwiesen. Es zeigt sich, dass In beiden Diffraktogrammen kein Peak zu erkennen ist, der einem ursprünglich vorhandenen 3-basischen Bleisulfat zugeordnet werden könnte. Die Zuordnung der einzelnen Peaks ergibt sich aus den unter den Diffraktogrammen angegebenen Kennzeichen.

Anschließend werden die Platten in LKW-Batterien vom Typ B einer Nennkapazität vorn 168 Ah und einer Kaltstartentladeleistung CCA von mindestens 90 Sekunden (Entladung der Batterie bei -18°C mit 633 Ampere bis zu 6 Volt verbaut. Die Batterien werden anschließend im Labor, nachdem sie mit Schwefelsäure einer Dichte von 1,074 g/ml gefüllt wurden, entsprechend dem Ladeprogramm, wie nachfolgend dargestellt, geladen.

In der folgenden Tabelle 3 wird ein Formationsprogramm zu LKW-Batterien dargestellt, bei dem einerseits, wie vorstehend gezeigt, TBLS+ und andererseits eine TBLS+/ Bleimennige-Mischung herangezogen wird. Hier wird ein Formationsprogramm angegeben, nach dem die verschiedenen Batterien aufgeladen werden:

**Tabelle 3**

| Schritt | Zeit [h] | Strom [A] | Kapazität [Ah] | Peak-Temperatur [°C] |
|---|---|---|---|---|
| 1 | 13 | 24 | 312 | 73 |
| 2 | 1 | 0 | 0 | 66 |
| 3 | 14 | 10 | 140 | 64 |
| Total | 28 | | 452 | |

Unter Berücksichtigung des Formationsprogramms gemäß Tabelle 3 wurden die aus der nachfolgenden Tabelle 4 ersichtlichen Ergebnisse erhalten:

**Tabelle 4**

| Ergebnisse | | TBLS+ (Vergleich) | TBLS+/Bleimennige (Erfindung) |
|---|---|---|---|
| Pos. Platte | PbO₂ % | 91,0 | 91,3 |
| | PbSO₄ % | 3,9 | 3,6 |
| | | | |
| Neg. Platte | Pb % | 91,8 | 92,2 |
| | PbSO₄ % | 4,8 | 3,3 |
| | PbO % | 2,6 | 2,9 |

Die Angaben der Tabelle 4 zeigen, dass die Erfindung, trotz erheblich herabgesetzten Anteils an TBLS+, das gleiche Ladeverhalten wie das Material gemäß Vergleichsversuch zeigt, dies mit dem erheblichen Vorteil, dass ein großer Anteil in dem Additiv aus kostengünstiger Bleimennige besteht.

Die geladenen LKW-Batterien, einerseits auf die TBLS+ -Rezeptur (Vergleich) und andererseits auf die TBLS+/Bleimennige-Rezeptur (Erfindung) zurückgehend, wurden zur Kapazitätsbestimmung einem K20 Test unterzogen. Die Batterien wurden mit konstant 8,4 A entladen. Dabei ergaben sich die aus der nachfolgenden Tabelle 5 ersichtlichen Messwerte:

**Tabelle 5**

| K20 Test | TBLS+ (Ah) | TBLS+/Bleimennige (Ah) | Spezifikationswert (Ah) |
|---|---|---|---|
| 1 | 178,3 | 184,1 | 168 |
| 2 | 177,6 | 185,4 | 168 |
| 3 | 176,8 | 181,2 | 168 |
| 4 | 174,3 | 182,5 | 168 |
| 5 | 174,4 | 180,8 | 168 |
| 6 | 172,1 | 178,1 | 168 |

Die Spezifikation 168 Ah ist die Nennkapazität der herangezogenen Batterie. Die erfindungsgemäß erzielten Werte liegen ersichtlich nicht nur deutlich über den Spezifikations-Werten, sondern auch erheblich über den Werten des Vergleichsversuches.

Ferner wurde eine Kaltstartstromprüfung (CCA) vorgenommen, bei der die Batterien bei -18 °C mit 633 A bis zu einer Restspannung von 6 Volt entladen wurden. Dabei ergaben sich die aus der folgenden Tabelle 6 ersichtlichen Werte:

**Tabelle 6**

| CCA | TBLS+ (s) | TBLS+/Bleimennige (s) | Spezifikationswert (s) |
|---|---|---|---|
| nach dem ersten 20-stündigen Entladen | 219 | 240 | 90 |
| nach dem zweiten 20-stündigen Entladen | 258 | 260 | 90 |
| nach dem dritten 20-stündigen Entladen | 243 | 257 | 90 |

Sowohl bei dem Vergleichstest als auch bei dem Test, der auf die vorliegende Erfindung zurückgeht, ist eine große Hochstromentladefestigkelt zu beobachten. Allerdings ist die Erfindung dem Vergleichsbeispiel deutlich überlegen.

## Patentansprüche

1. Additiv zur Herstellung von positiven aktiven Massen für Bleiakkumulatoren auf der Basis feinteiligen 4-basischen Bleisulfats einer mittleren Teilchengröße von weniger als 3 µm sowie feinteiliger Kieselsäure, **dadurch gekennzeichnet, dass** das Additiv Bleimennige (2PbO.PbO₂) enthält und die mittlere Teilchengröße der Bleimennige kleiner als 1,5 µm ist.

2. Additiv nach Anspruch 1, **dadurch gekennzeichnet, dass** das Additiv 20 bis 80 Gew.-% Bleimennige enthält.

3. Additiv nach Anspruch 2, **dadurch gekennzeichnet, dass** das Additiv 45 bis 65 Gew.-% Bleimennige enthält.

4. Additiv nach einem der vorhergehenden Ansprüche, **dadurch gekennzeichnet, dass** die mittlere Teilchengröße der Bleimennige zwischen 0,2 und 1 µm liegt.

5. Additiv nach Anspruch 4, **dadurch gekennzeichnet, dass** die mittlere Teilchengröße der Bleimennige zwischen 0,4 und 0,6 µm liegt.

6. Additiv nach mindestens einem der vorhergehenden Ansprüche, **dadurch gekennzeichnet, dass** die Bleimennige eine spezifische Oberfläche nach BET von weniger als 1,5 m²/g, aufweist.

7. Additiv nach mindestens einem der vorhergehenden Ansprüche, **dadurch gekennzeichnet, dass** in der Bleimennige auf 1 Mol PbO₂ weniger als 2,2 Mol PbO entfallen.

8. Additiv nach mindestens einem der Ansprüche 1 bis 7, **dadurch gekennzeichnet, dass** auf 1 Mol PbO₂ weniger als 2,1 Mol PbO entfallen.

9. Additiv nach mindestens einem der vorhergehenden Ansprüche, **dadurch gekennzeichnet, dass** die feinteilige Kieselsäure hydrophob und/oder hydrophil ist.

10. Additiv nach mindestens einem der vorhergehenden Ansprüche, **dadurch gekennzeichnet, dass** die feinteilige Kieselsäure eine mittlere Teilchengröße von 10 bis 120 nm und/oder eine spezifische Oberfläche nach BET von weniger als 300 m²/g aufweist.

11. Additiv nach mindestens einem der vorhergehenden Ansprüche, **dadurch gekennzeichnet, dass** die mittlere Teilchengröße des 4-basischen Bleisulfats kleiner als 1,5 µm ist.

12. Additiv nach mindestens einem der vorhergehenden Ansprüche, **dadurch gekennzeichnet, dass** das Additiv, bezogen auf das Gesamtgewicht aus 4-basischem Bleisulfat und feinteiliger Kieselsäure, 0,01 bis 10 Gew.-% feinteilige Kieselsäure enthält.

13. Additiv nach mindestens einem der vorhergehenden Ansprüche, **dadurch gekennzeichnet, dass** es in Form einer wässrigen Aufschlämmung vorliegt, wobei die Aufschlämmung 30 bis 65 Gew.-% Additiv enthält.

14. Additiv nach Anspruch 13, **dadurch gekennzeichnet, dass** die wässrige Aufschlämmung 53 bis 57 Gew.-% Additiv enthält.

15. Verfahren zur Herstellung eines Additivs nach mindestens einem der vorhergehenden Ansprüche 1 bis 14, **dadurch gekennzeichnet, dass** 4-basisches Bleisulfat und Bleimennige im wässrigen Medium nassvermahlen werden, wobei das Vermahlen so lange fortgeführt wird, bis die mittlere Teilchengröße des 4-basischen Bleisulfats weniger als 3 µm beträgt und wobei dem zu vermahlenden oder vermahlten Material feinteilige Kieselsäure zugegeben wird.

16. Verfahren nach Anspruch 15, **dadurch gekennzeichnet, dass** das Verfahren so lange ausgeführt wird, bis sich die Merkmale des Additivs nach mindestens einem der vorhergehenden Ansprüche 1 bis 13 einstellen.

17. Verfahren nach Anspruch 16, **dadurch gekennzeichnet, dass** das Nassvermahlen in Rührwerkskugelmühlen durchgeführt wird.

18. Verfahren nach Anspruch 17, **dadurch gekennzeichnet, dass** das Nassvermahlen mit Mahlkörpern in Form von Zirkonoxidkugeln eines Durchmessers von 0,2 bis 0,6 mm durchgeführt wird.

19. Verfahren nach mindestens einem der Ansprüche 15 bis 18, **dadurch gekennzeichnet, dass** das in Form einer wässrigen Aufschlämmung erhaltene Mahlerzeugnis durch Sprühtrocknen in ein Pulver überführt wird.

20. Verfahren nach mindestens einem der Ansprüche 15 bis 19, **dadurch gekennzeichnet, dass** das Nassvermahlen bei einer Temperatur von weniger als 70°C durch-geführt wird.

21. Verfahren nach Anspruch 20, **dadurch gekennzeichnet, dass** das Nassvermahlen bei einer Temperatur von 40 bis 50°C durchgeführt wird.

22. Verwendung des Additivs nach mindestens einem der vorhergehenden Ansprüche 1 bis 15 zur Herstellung von positiven aktiven Pasten für Bleiakkumulatoren.

## Claims

1. An additive for the production of positive active compositions for lead accumulators based on finely divided tetrabasic lead sulphate having a mean particle size of less than 3 µm and finely divided silica, **characterised in that** the additive contains red lead (2PbO.PbO2) and the mean particle size of the red lead is less than 1.5 µm.

2. An additive according to claim 1, **characterised in that** the additive contains 20 to 80% by weight of red lead.

3. An additive according to claim 2, **characterised in that** the additive contains 45 to 65% by weight of red lead.

4. An additive according to any one of the preceding claims, **characterised in that** the mean particle size of the red lead is between 0.2 and 1 µm.

5. An additive according to claim 4, **characterised in that** the mean particle size of the red lead is between 0.4 and 0.6 µm.

6. An additive according to at least any one of the preceding claims, **characterised in that** the red lead has a specific BET surface area of less than 1.5 m2/g.

7. An additive according to at least any one of the preceding claims, **characterised in that** there are less than 2.2 mol of PbO per 1 mol of PbO2 in the red lead.

8. An additive according to at least any one of claims 1 to 7, **characterised in that** there are less than 2.1 mol of PbO per 1 mol of PbO2.

9. An additive according to at least any one of the preceding claims, **characterised in that** the finely divided silica is hydrophobic and/or hydrophilic.

10. An additive according to at least any one of the preceding claims, **characterised in that** the finely divided silica has a mean particle size of 10 to 120 nm and/or a specific BET surface area of less than 300 m2/g.

11. An additive according to at least any one of the preceding claims, **characterised in that** the mean particle size of the tetrabasic lead sulphate is less than 1.5 µm.

12. An additive according to at least any one of the preceding claims, **characterised in that** the additive, based on the total weight of tetrabasic lead sulphate and finely divided silica, contains 0.01 to 10% by weight of finely divided silica.

13. An additive according to at least any one of the preceding claims, **characterised in that** it is in the form of an aqueous slurry, the slurry containing 30 to 65% by weight of additive.

14. An additive according to claim 13, **characterised in that** the aqueous slurry contains 53 to 57% by weight of additive.

15. A method for producing an additive according to at least any one of the preceding claims 1 to 14, **characterised in that** tetrabasic lead sulphate and red lead are wet-ground in the aqueous medium, the grinding being continued until the mean particle size of the tetrabasic lead sulphate is less than 3 µm, and finely divided silica being added to the material which is to be ground or has been ground.

16. A method according to claim 15, **characterised in that** the method is carried out until the features of the additive according to at least any one of the preceding claims 1 to 13 are established.

17. A method according to claim 16, **characterised in that** the wet grinding is carried out in agitator ball mills.

18. A method according to claim 17, **characterised in that** the wet grinding is carried out with grinding bodies in the form of zirconia balls with a diameter of 0.2 to 0.6 mm.

19. A method according to at least any one of claims 15 to 18, **characterised in that** the grinding product obtained in the form of an aqueous slurry is converted to a powder by spray drying.

20. A method according to at least any one of claims 15 to 19, **characterised in that** the wet grinding is carried out at a temperature of less than 70°C.

21. A method according to claim 20, **characterised in that** the wet grinding is carried out at a temperature of 40 to 50°C.

22. Use of the additive according to at least one of the preceding claims 1 to 15 for the production of positive active pastes for lead accumulators.

## Revendications

1. Additif pour la fabrication de masses positives actives pour des accumulateurs au plomb à base de sulfate de plomb quadribasique finement réparti, ayant une taille de particules moyenne inférieure à 3 µm, et d'acide silicique finement réparti, l'additif étant **caractérisé en ce qu'**il contient du minium de plomb (2PbO.PbO₂) et la taille moyenne des particules du minium de plomb est inférieure à 1,5 µm.

2. Additif selon la revendication 1, l'additif étant **caractérisé en ce qu'**il comprend 20 à 80 % en poids de minimum de plomb.

3. Additif selon la revendication 2, l'additif étant **caractérisé en ce qu'**il comprend 45 à 65 % en poids de minium de plomb.

4. Additif selon une des revendications précédentes, **caractérisé en ce que** la taille moyenne des particules de minium de plomb est située entre 0,2 et 1 µm.

5. Additif selon la revendication 4, **caractérisé en ce que** la taille moyenne des particules de minium de plomb est située entre 0,4 et 0,6 µm.

6. Additif selon au moins une des revendications précédentes, **caractérisé en ce que** le minium de plomb présente une surface spécifique selon BET inférieure à 1,5 m²/g.

7. Additif selon au moins une des revendications précédentes, **caractérisé en ce qu'**il y a moins de 2,2 moles de PbO pour 1 mole de PbO₂ dans le minium de plomb.

8. Additif selon au moins une des revendications 1 à 7, **caractérisé en ce qu'**il y a moins de 2,1 moles de PbO pour 1 mole de PbO₂.

9. Additif selon au moins une des revendications précédentes, **caractérisé en ce que** l'acide silicique finement réparti est hydrophobe et/ou hydrophile.

10. Additif selon au moins une des revendications précédentes, **caractérisé en ce que** l'acide silicique finement réparti présente une taille moyenne de particules de 10 à 120 nm et/ou une surface spécifique selon BET inférieure à 300 m²/g.

11. Additif selon au moins une des revendications précédentes, **caractérisé en ce que** la taille moyenne de particules du sulfate de plomb quadribasique est inférieure à 1,5 µm.

12. Additif selon au moins une des revendications précédentes, l'additif étant **caractérisé en ce qu'**il comprend, par rapport au poids total constitué du sulfate de plomb quadribasique et de l'acide silicique finement réparti, 0,01 à 10 % en poids d'acide silicique finement réparti.

13. Additif selon au moins une des revendications précédentes, **caractérisé en ce qu'**il se présente sous la forme d'une suspension aqueuse, la suspension contenant 30 à 65 % en poids d'additif.

14. Additif selon la revendication 13, **caractérisé en ce que** la suspension aqueuse contient 53 à 57 % en poids d'additif.

15. Procédé de fabrication d'un additif selon au moins une des revendications précédentes 1 à 14, **caractérisé en ce que** le sulfate de plomb quadribasique et le minium de plomb sont broyés par voie humide en milieu aqueux, le broyage étant poursuivi jusqu'à ce que la taille moyenne des particules du sulfate de plomb quadribasique soit inférieure à 3 µm, et la matière à broyer ou broyée étant additionnée d'acide silicique finement réparti.

16. Procédé selon la revendication 15, le procédé étant **caractérisé en ce qu'**il est poursuivi jusqu'à ce que les caractéristiques de l'additif soient ajustées selon au moins une des revendications précédentes 1 à 13.

17. Procédé selon la revendication 16, **caractérisé en ce que** le broyage par voie humide est réalisé dans des moulins à billes avec agitateur.

18. Procédé selon la revendication 17, **caractérisé en ce que** le broyage par voie humide est réalisé avec des corps de broyage prenant la forme de billes d'oxyde de zirconium ayant un diamètre de 0,2 à 0,6 mm.

19. Procédé selon au moins une des revendications 15 à 18, **caractérisé en ce que** le produit de broyage obtenu sous forme de suspension aqueuse est transformé en une poudre par séchage par pulvérisation.

20. Procédé selon au moins une des revendications 15 à 19, **caractérisé en ce que** le broyage par voie humide est réalisé à une température inférieure à 70°C.

21. Procédé selon la revendication 20, **caractérisé en ce que** le broyage par voie humide est réalisé à une température de 40 à 50°C.

22. Utilisation de l'additif selon au moins une des revendications précédentes 1 à 15 pour la fabrication de pâtes positives actives pour des accumulateurs au plomb.
